# EUROPEAN PATENT SPECIFICATION

(11) **EP 3 943 550 B1**
(45) Date of publication and mention of the grant of the patent: **06.11.2024**
(21) Application number: 20777950.5
(22) Date of filing: 16.03.2020
(51) Int. Cl.: C08L 67/00, C08L 75/04, C08G 18/02, C08G 18/09, C08G 18/10, C08G 18/28, C08G 18/32, C08G 18/42, C08G 18/74, C08G 18/75, C08G 18/76, C08G 18/79

(54) **POWDERED POLYCARBODIIMIDE COMPOUND AND ESTER RESIN COMPOSITION**
PULVERFÖRMIGE POLYCARBODIIMIDVERBINDUNG UND ESTERHARZZUSAMMENSETZUNG
COMPOSÉ POLYCARBODIIMIDE EN POUDRE ET COMPOSITION DE RÉSINE D'ESTER

(30) Priority: 22.03.2019 JP 2019054653; 31.10.2019 JP 2019198976
(43) Date of publication of application: 26.01.2022
(73) Proprietor: Nisshinbo Chemical Inc., Tokyo 103-8650 (JP)
(72) Inventor: MATSUMOTO, Nobuyuki, Chiba-shi, Chiba 267-0056 (JP); YANAGISAWA, Kenichi, Chiba-shi, Chiba 267-0056 (JP)
(74) Representative: Steffan & Kiehne Patentanwälte PartG mbB
(86) International application number: PCT/JP2020/011543
(87) International publication number: WO 2020/196055

(56) References cited:
- WO-A1-2015/119191
- WO-A1-2015/119191
- WO-A1-2017/131104
- WO-A1-2018/123362
- JP-A- 2007 521 360
- JP-A- 2008 063 442
- JP-A- 2015 520 267

## Description

### Technical Field

The present invention relates to a powdered polycarbodiimide compound which can improve hydrolytic resistance of ester resins, and an ester resin composition comprising the same.

### Background Art

Polycarbodiimide compounds have been used as hydrolytic-resistance stabilizers for ester resins in the related art.

While polycarbodiimide compounds have a plurality of carbodiimide groups in the molecule, some known polycarbodiimide compounds have a structure in which a urea bond or a urethane bond is introduced into the molecule to improve the compatibility with ester resins.

Moreover, the polycarbodiimide compounds are preferably powder from the viewpoint of transportability and handling properties in use when added to ester resins. For example, PTL 1 discloses a powdered carbodiimide prepared by reacting a diamine compound or a diol compound with an isocyanate group.

PTL 2 discloses a block copolymer composed of a predetermined carbodiimide segment and a polyester polyol segment integrated therewith. PTL3 relates to a polyester resin composition containing a polyester resin and a carbodiimide compound, which is excellent in hydrolysis resistance and bleed out resistance and does not invite a large increase in melt viscosity and solution viscosity. Synthesis examples 1-7 describe the preparation of a carbodiimide compound from 4,4'-dicyclohexylmethane diisocyanate as a diisocyanate. Afterwards said carbodiimide is reacted with polyethylene glycol monomethyl ether and a polyester diol (molecular weight about 3000), where a pelletized carb. Then 1% of the polycarbodiimide compound is added to a PET resin, whereby the hydrolysis resistance and bleed out of the polyester resin compositions are improved.

### Citation List

### Patent Literature

PTL 1: JP 2000-256436 A
PTL 2: JP 2001-278944 A PTL3 : WO 2015/119191 A1

### Summary of Invention

### Technical Problem

However, in the specific powdered polycarbodiimide compounds disclosed in PTL 1 above, the terminal isocyanate group in the molecule is capped with ethanol or in the state where a residual amino or hydroxyl group is present in the terminal. Such powdered polycarbodiimide compounds having a terminal isocyanate group capped with ethanol or in the state where active hydrogen is present have problems in that unreacted terminal isocyanate groups are likely to remain in the production process, resulting in an increased viscosity when those powdered polycarbodiimide compounds are added to and mixed with an ester resin.

Meanwhile, as disclosed in PTL 2, the powdered polycarbodiimide compound prepared by introducing a urethane bond through integration of polyester polyol is likely to have a large molecular weight of 10000 or more, leading to an increase in viscosity when added to and mixed with an ester resin and a large carbodiimide equivalent. In short, its effect of improving the hydrolytic resistance is not always sufficient.

Accordingly, there has been a demand for a polycarbodiimide compound used as a hydrolytic-resistance stabilizer for ester resins in the form of a powdered product which hardly causes an increase in viscosity when added to and mixed with an ester resin, can ensure favorable hydrolytic resistance, and is easy to handle.

The present invention has been made to solve such problems, and an object of the present invention is to provide a powdered polycarbodiimide compound which can improve the hydrolytic resistance of an ester resin, hardly causes an increase in viscosity when added to and mixed with an ester resin, and has high handling properties, and an ester resin composition comprising the same.

### Solution to Problem

The present invention is based on findings that a predetermined powdered polycarbodiimide compound having a predetermined melting point and a structure to which a urethane bond derived from a diol compound, wherein the diol compound has a molecular weight of 100 or less, is introduced into a carbodiimide segment has a variety of excellent properties as a hydrolytic-resistance stabilizer for ester resins.

In other words, the present invention provides the following [1] to [12].
[1] A powdered polycarbodiimide compound represented by the following formula (1) and having a melting point of 50°C or more: 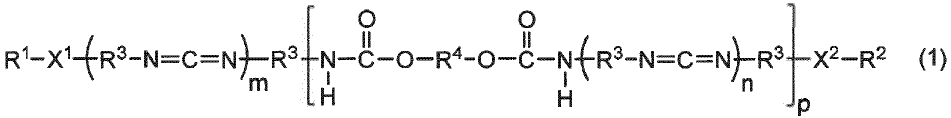
   wherein R¹ and R² each independently represent a residue of an organic compound having one functional group reactive with an isocyanate group, wherein the functional group is removed from the organic compound; with the proviso that the organic compound is not ethanol;
   R³ represents a divalent residue of a diisocyanate compound from which two isocyanate groups are removed; the diisocyanate compound has a hydrocarbon group which directly bonds to the two isocyanate groups; a plurality of R³ are the same or different;
   R⁴ represents a divalent residue of a diol compound from which two hydroxyl groups are removed, and wherein the diol compound has a molecular weight of 100 or less; a plurality of R⁴ are the same or different;
   X¹ and X² each independently represent a bond formed by a reaction of the functional group of the organic compound with the isocyanate group of the diisocyanate compound;
   m and n each represent a number of 1 to 20; and p represents a number of 2 to 20.
[2] The powdered polycarbodiimide compound according to [1], wherein the ratio (Ic/Iu) of a peak intensity (Ic) at a wavelength of 2100 to 2200 cm⁻¹ derived from a carbodiimide group to a peak intensity (I_{U}) at a wavelength of 1650 to 1750 cm⁻¹ derived from a urethane bond in an infrared absorption spectrum is 2.7 or more.
[3] The powdered polycarbodiimide compound according to [1] or [2], wherein the ratio of a carbodiimide equivalent to the number of urethane bonds in the formula (1) is 50 or less.
[4] The diol compound has a molecular weight of 100 or less.
[5] The powdered polycarbodiimide compound according to any one of [1] to [4], wherein the diol compound is one or more selected from the group consisting of ethylene glycol, 1,3-propylene glycol, 1,4-butanediol, and 1,3-butanediol.
[6] The powdered polycarbodiimide compound according to any one of [1] to [5], wherein the bonds represented by X¹ and X² each are a urethane bond, a urea bond, or a carbodiimide bond.
[7] The powdered polycarbodiimide compound according to any one of [1] to [6], wherein the organic compound is a compound represented by the following formula (2):

   R¹²(OCHR¹¹CH₂)_{q}OH (2)

   wherein R¹¹ represents a hydrogen atom or a methyl group; when a plurality of R¹¹ are present, these R¹¹ are the same or different;
   R¹² represents a hydrocarbon group having 1 to 18 carbon atoms or an acyl group having 2 to 18 carbon atoms; and
   q is an integer of 1 to 70.
[8] The powdered polycarbodiimide compound according to [7], wherein in the organic compound, R¹¹ is a hydrogen atom and q is an integer of 1 to 10.
[9] The powdered polycarbodiimide compound according to any one of [1] to [8], wherein the diisocyanate compound is one or more selected from the group consisting of dicyclohexylmethane-4,4'-diisocyanate and 4,4'-diphenylmethane diisocyanate.
[10] An ester resin composition comprising the powdered polycarbodiimide compound according to any one of [1] to [9] and an ester resin.
[11] The ester resin composition according to [10], wherein the content of the powdered polycarbodiimide compound is 0.2 to 5.0 parts by mass relative to 100 parts by mass of the ester resin.
[12] The ester resin composition according to [10] or [11], wherein the ester resin composition is for use as a food product packaging container.

### Advantageous Effects of Invention

The present invention provides a powdered polycarbodiimide compound which can improve the hydrolytic resistance of an ester resin, hardly causes an increase in viscosity when added to and mixed with the ester resin, and has high handling properties, and an ester resin composition comprising the same.

The powdered polycarbodiimide compound according to the present invention has higher transportability, more significantly suppresses an increase in viscosity during addition to and mixing with an ester resin, and is easier to handle, compared to liquid products. For this reason, the powdered polycarbodiimide compound according to the present invention can be suitably used as a hydrolytic-resistance stabilizer for ester resins.

### Description of Embodiment

### [Powdered polycarbodiimide compound]

The powdered polycarbodiimide compound according to the present invention is represented by the following formula (1), and has a melting point of 50°C or more.

Such a powdered polycarbodiimide compound is a powder which has a melting point of 50°C or more and hardly causes blocking. The powdered polycarbodiimide compound has high transportability and higher handling properties when added to and mixed with an ester resin than those of liquid products.

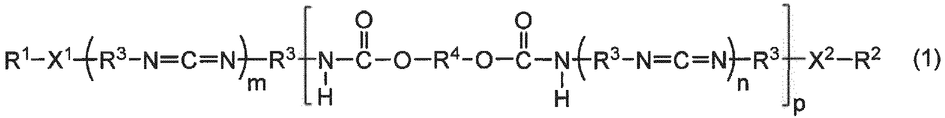

In the formula (1), R¹ and R² each independently represent a residue of an organic compound having one functional group reactive with an isocyanate group, wherein the functional group is removed from the organic compound. To be noted, the organic compound is not ethanol.

R³ represents a divalent residue of a diisocyanate compound from which two isocyanate groups are removed. The diisocyanate compound has a hydrocarbon group which directly bonds to the two isocyanate groups. A plurality of R³ are the same or different.

R⁴ represents a divalent residue of a diol compound from which two hydroxyl groups are removed and wherein the diol compound has a molecular weight of 100 or less. A plurality of R⁴ are the same or different.

X¹ and X² each independently represent a bond formed by reaction of the functional group of the organic compound with the isocyanate group of the diisocyanate compound.
m and n each represent a number of 1 to 20. p represents a number of 2 to 20.

### <R¹ and R²>

In the formula (1), R¹ and R² represents a residue of an organic compound (excluding ethanol) having one functional group reactive with an isocyanate group, wherein the functional group is removed from the organic compound. The organic compound is a terminal capping agent which caps the terminal isocyanate group of a compound represented by the formula (1). R¹ and R² may be the same or different.

To obtain a compound whose terminal isocyanate group is surely capped, the organic compound has a boiling point of preferably 80°C or more, more preferably 100°C or more, still more preferably 120°C or more at a pressure of one atmosphere.

In such an organic compound having a high boiling point, volatilization of the organic compound during a reaction with the terminal isocyanate group of a precursor of the compound represented by the formula (1) is suppressed, ensuring capping of the terminal isocyanate group. For this reason, an increase in viscosity caused by uncapped terminal isocyanate groups is suppressed when the powdered polycarbodiimide compound is added to and mixed with an ester resin. From such a viewpoint, the organic compound as a terminal capping agent preferably has a boiling point of 80°C or more.

Although not particularly limited, the upper limit of the boiling point is preferably 300°C or less.

The organic compound has a boiling point in the above range. As a compound which can ensure capping of the terminal isocyanate group, the organic compound has a molecular weight of preferably 50 or more, more preferably 60 or more, still more preferably 70 or more.

For the powdered polycarbodiimide compound to impart favorable hydrolytic resistance to an ester resin, it is preferred that the carbodiimide equivalent in the powdered polycarbodiimide compound be not significantly large. Thus, the organic compound has a molecular weight of preferably 5000 or less, more preferably 2000 or less, still more preferably 1000 or less.

Examples of the functional group reactive with an isocyanate group include a hydroxyl group, an amino group, an isocyanate group, and a carboxy group. If the functional group is a hydroxyl group, a urethane bond is formed by a reaction of the functional group with an isocyanate group. If the functional group is an amino group, a urea bond is formed. If the functional group is an isocyanate group, a carbodiimide bond is formed. If the functional group is a carboxy group, an amido bond is formed. The bond formed by a reaction of each combination of the functional group and the isocyanate group corresponds to X¹ and X² in the formula (1).

Examples of the organic compound include monoalcohols, monoamines, monoisocyanates, and monocarboxylic acids. These organic compounds may be used alone or in combination.

Examples of the monoalcohols include 1-propanol, cyclohexanol, 2-ethylhexanol, (poly)ethylene glycol monomethyl ether, (poly)propylene glycol monomethyl ether, phenol, cresol, and naphthol.

Examples of the monoamines include pentylamine, cyclohexylamine, dipropylamine, and dicyclohexylamine.

Examples of the monoisocyanates include propyl isocyanate, butyl isocyanate, cyclohexyl isocyanate, phenyl isocyanate, tolyl isocyanate, dimethylphenyl isocyanate, and 2,6-diisopropylphenyl isocyanate.

Examples of the monocarboxylic acids include acetic acid, propionic acid, butanoic acid, pentanoic acid, hexanoic acid, heptanoic acid, octanoic acid, nonanoic acid, decanoic acid, cyclohexanecarboxylic acid, adamantaneacetic acid, benzoic acid, and phenylacetic acid.

From the viewpoint of the compatibility between the powdered polycarbodiimide compound and the ester resin, the organic compound is preferably a compound represented by the following formula (2):

R¹²(OCHR¹¹CH₂)_{q}OH (2)

In the formula (2), R¹¹ represents a hydrogen atom or a methyl group. If a plurality of R¹¹ are present, these R¹¹ are the same or different.

R¹² represents a hydrocarbon group having 1 to 18 carbon atoms or an acyl group having 2 to 18 carbon atoms.

q represents an integer of 1 to 70.

To suppress an increase in viscosity when the powdered polycarbodiimide compound is added to and mixed with the ester resin, the organic compound is more preferably a compound represented by the formula (2) where R¹¹ is a hydrogen atom and q is an integer of 1 to 10. Such a compound is (poly)ethylene glycol monoalkylether.

The hydrocarbon group for R¹² is preferably those having 1 to 10 carbon atoms, more preferably 1 to 5, still more preferably 1 to 3, further still more preferably 1, i.e., a methyl group.

The acyl group for R¹² is preferably those having 2 to 10 carbon atoms, more preferably 2 to 5, still more preferably 2 to 3, further still more preferably 2, i.e., an acetyl group.

q is an integer of more preferably 1 to 8, still more preferably 3 to 5.

The organic compound is particularly preferably polyethylene glycol monomethyl ether where q is an integer of 3 to 5.

### <X¹ and X²>

In the formula (1), X¹ and X² each independently represent a bond formed by a reaction of the functional group of the organic compound with an isocyanate group of a diisocyanate compound, from which R³ is derived. As described above, X¹ and X² each represent a bond corresponding to the organic compound, and may be the same or different.

From the viewpoint of the compatibility between the powdered polycarbodiimide compound and the ester resin, the bonds represented by X¹ and X² are preferably a urethane bond, a urea bond, or a carbodiimide bond. If the ester resin is an ester polyurethane resin, the bond is more preferably a urethane bond.

### <R3>

In the formula (1), R³ represents a divalent residue of a diisocyanate compound from which two isocyanate groups are removed. The diisocyanate compound has a hydrocarbon group which directly bonds to the two isocyanate groups. A plurality of R³ in the formula (1) may be the same or different.

The diisocyanate compound can be any diisocyanate compound, and may be any one of linear or cyclic aliphatic diisocyanate compounds, aromatic diisocyanate compounds, or heterocycle diisocyanate compounds. These may be used alone or in combination.

Examples of the linear aliphatic diisocyanate compounds include tetramethylene diisocyanate, hexamethylene diisocyanate, dodecamethylene diisocyanate, and 2,2,4-trimethylhexamethylene diisocyanate.

Examples of the alicyclic diisocyanate compounds include 1,3-bis(isocyanatomethyl)cyclohexane, 1,4-bis(isocyanatomethyl)cyclohexane, 2,2-bis(4-isocyanatocyclohexyl)propane, isophorone diisocyanate, and dicyclohexylmethane-4,4'-diisocyanate.

Examples of the aromatic diisocyanate compounds include tolylene diisocyanate, diphenylmethane diisocyanate, and 2,4,6-triisopropylbenzene-1,3-diyl diisocyanate.

Examples of the aliphatic diisocyanate compounds containing an aromatic ring include m-xylylene diisocyanate and 1,3-bis(2-isocyanato-2-propyl)benzene (trivial name: tetramethylxylylene diisocyanate).

Among these, the diisocyanate compound is preferably dicyclohexylmethane-4,4'-diisocyanate and 4,4'-diphenylmethane diisocyanate, and is more preferably dicyclohexylmethane-4,4'-diisocyanate from the viewpoint of availability, its appropriate carbodiimide equivalent in the powdered polycarbodiimide compound, and easiness in synthesis of the powdered polycarbodiimide compound.

### <R4>

In the formula (1), R⁴ represents a divalent residue of a diol compound from which two hydroxyl groups are removed and wherein the diol compound has a molecular weight of 100 or less. A plurality of R⁴ in the formula (1) may be the same or different.

The diol compound forms a urethane bond through a reaction of each of the two hydroxyl groups in the diol compound with its corresponding isocyanate group in the diisocyanate compound. Thereby, the powdered polycarbodiimide compound according to the present invention has a structure in which a urethane bond is introduced to a carbodiimide segment.

The introduction of the urethane bond enhances the compatibility of the polycarbodiimide compound with ester resins, particularly, with ester polyurethane resins, compared to those without the urethane bond introduced. The introduction of the urethane bond also increases the melting point of the resulting powdered polycarbodiimide compound, thus suppressing blocking thereof.

For the powdered polycarbodiimide compound to impart favorable hydrolytic resistance to the ester resin, it is preferred that the carbodiimide equivalent in the powdered polycarbodiimide compound be not significantly large. Because a liquid having a low viscosity facilitates the synthesis of the powdered polycarbodiimide compound, the diol compound is a low molecular weight compound having a molecular weight of 100 or less.

Moreover, R⁴ is preferably a hydrocarbon group to facilitate the synthesis of the powdered polycarbodiimide compound and ensure favorable hydrolytic resistance as above.

Specifically, preferred examples of the diol compound include ethylene glycol, propylene glycol, 1,4-butanediol, and 1,3-butanediol. These diol compounds may be used alone or in combination. To facilitate the synthesis of the powdered polycarbodiimide compound, the diol compound is preferably liquids having a low viscosity, preferably ethylene glycol and propylene glycol, more preferably ethylene glycol.

### <m and n>

In the formula (1), m and n each represent a degree of polymerization of a carbodiimide group. m and n represent a number of 1 to 20, preferably 1 to 10, more preferably 2 to 8. m and n may be the same or different.

If m and n exceed 20, it is difficult to provide favorable compatibility between the powdered polycarbodiimide compound and the ester resin. A large number of carbodiimide groups per molecule is likely to increase the viscosity when the powdered polycarbodiimide compound is added to and mixed with the ester resin.

The term "degree of polymerization of the carbodiimide group" used in this specification indicates the number of carbodiimide groups formed through polymerization (decarboxylative condensation reaction) of diisocyanate compounds described above, and is represented as an average degree of polymerization.

### <p>

In the formula (1), p represents the number of units including the carbodiimide segment [(R³-N = C = N)ₙ] and two urethane bonds introduced to the carbodiimide segment through the diol compound. p is a number of 2 to 20, preferably 2 to 15, more preferably 3 to 8.

If p is less than 2, the melting point of the powdered polycarbodiimide compound is significantly low, and the powder is prone to blocking. In contrast, if p exceeds 20, a large number of carbodiimide groups per molecule of the powdered polycarbodiimide compound is likely to increase the viscosity when the powdered polycarbodiimide compound is added to and mixed with the ester resin.

To provide favorable compatibility of the powdered polycarbodiimide compound with the ester resin and suppress an increase in viscosity when the powdered polycarbodiimide compound is added to and mixed with the ester resin, the powdered polycarbodiimide compound has a molecular weight of preferably 20000 or less, more preferably 2000 to 15000, still more preferably 3000 to 10000.

The molecular weight of the powdered polycarbodiimide compound can be measured by gel permeation chromatography as a number average molecular weight (against polystyrene standards).

### (Infrared radiation absorption (IR) spectrum)

The powdered polycarbodiimide compound has a ratio (I_{C}/I_{U}) of preferably 2.7 or more, more preferably 2.8 to 5.2, still more preferably 2.9 to 5.0, further still more preferably 3.0 to 4.0 in the IR spectrum where I_{U} is the peak intensity at a wavelength of 1650 to 1750 cm⁻¹ derived from the urethane bond and Ic is the peak intensity at a wavelength of 2100 to 2200 cm⁻¹ derived from the carbodiimide group.

The peak intensity in the IR spectrum in the present invention indicates the peak height (subjected to base line correction) in the absorbance in the predetermined wavelength band specified above in a Fourier transform infrared radiation absorption (FTIR) spectrum.

The peak intensity ratio (I_{C}/I_{U}) is an index indicating the balance between the concentration of the carbodiimide group and that of the urethane bond in the powdered polycarbodiimide compound.

The value of the ratio I_{C}/I_{U} falls within the above range in the powdered polycarbodiimide compound which has a melting point of 50°C or more, hardly causes an increase in viscosity when added to and mixed with the ester resin, and can impart favorable hydrolytic resistance to the ester resin.

### (Ratio of carbodiimide equivalent to the number of urethane bonds)

In the powdered polycarbodiimide compound, the ratio (b/a) of the carbodiimide equivalent (b) to the number (a) of urethane bonds in the formula (1) is preferably 50 or less, more preferably 10 to 48, still more preferably 25 to 45.

A value of the ratio (b/a) within the above range results in a powdered polycarbodiimide compound which has a melting point of 50°C or more, hardly causes blocking, hardly causes an increase in viscosity when added to and mixed with the ester resin, and can improve the hydrolytic resistance of the ester resin.

The value of the ratio (b/a) is based on the balance between the concentration of the carbodiimide group and that of the urethane bond in the powdered polycarbodiimide compound, and can be an index indicating the physical properties described above.

To ensure favorable compatibility of the powdered polycarbodiimide compound with the ester resin and suppress an increase in viscosity when the powdered polycarbodiimide compound is added to and mixed with the ester resin, the number (a) of urethane bonds is preferably 4 to 40, more preferably 4 to 30, still more preferably 6 to 16.

To impart favorable compatibility and suppress an increase in viscosity when the powdered polycarbodiimide compound is added to and mixed with the ester resin, the carbodiimide equivalent (b) is preferably 100 to 600, more preferably 200 to 400, still more preferably 250 to 360.

### [Method of producing powdered polycarbodiimide compound]

The method of producing the powdered polycarbodiimide compound is not particularly limited, and the powdered polycarbodiimide compound can be produced by a known method. The powdered polycarbodiimide compound can be prepared through milling of the solid carbodiimide compound prepared by the synthetic method selected from the methods (1) to (3), for example:
(1) A method of subjecting the diisocyanate compound to a carbodiimidization reaction in the presence of a catalyst to yield isocyanate-terminated polycarbodiimide, and then adding the organic compound (terminal capping agent) and the diol compound to perform a urethanization reaction and a terminal capping reaction;
(2) A method of mixing the diisocyanate compound, the diol compound, and the organic compound (terminal capping agent), and performing a urethanization reaction, a carbodiimidization reaction, and a terminal capping reaction in the presence of a catalyst; and
(3) A method of subjecting a portion of the diisocyanate compound and the diol compound to a urethanization reaction to yield isocyanate-terminated polycarbodiimide to which the urethane bond is introduced, and mixing the isocyanate-terminated polycarbodiimide to which the urethane bond is introduced, the remaining portion of the diisocyanate compound, and the organic compound (terminal capping agent) to perform a carbodiimidization reaction and a terminal capping reaction in the presence of a catalyst.

Among these synthetic methods, preferred is the method (1) from the viewpoint of production efficiency.

### (Carbodiimidization reaction)

The carbodiimidization reaction is preferably a decarboxylative condensation reaction of the diisocyanate compound in the presence of a carbodiimidization catalyst, for example.

Examples of the carbodiimidization catalyst include phospholene oxides such as 1-phenyl-2-phospholene-1-oxide, 3-methyl-1-phenyl-2-phospholene-1-oxide, 1-ethyl-2-phospholene-1-oxide, 3-methyl-2-phospholene-1-oxide, and 3-phospholene isomers thereof. Among these, preferred is 3-methyl-1-phenyl-2-phospholene-1-oxide from the viewpoint of its reactivity and availability.

The amount of the carbodiimidization catalyst to be used is usually preferably 0.01 to 10 parts by mass, more preferably 0.05 to 5 parts by mass, still more preferably 0.2 to 1 part by mass relative to 100 parts by mass of the diisocyanate compound.

The decarboxylative condensation reaction of the diisocyanate compound can be performed in a solvent or in the absence thereof. Examples of the solvent to be used include alicyclic ethers such as tetrahydrofuran, 1,3-dioxane, and dioxolane; aromatic hydrocarbons such as benzene, toluene, xylene, and ethylbenzene; halogenated hydrocarbons such as chlorobenzene, dichlorobenzene, trichlorobenzene, perclene, trichloroethane, and dichloroethane; and cyclohexanone. These may be used alone or in combination.

If the reaction is performed in the solvent, the concentration of the diisocyanate compound is preferably 5 to 55 mass%, more preferably 5 to 20 mass%.

The reaction temperature for the decarboxylative condensation reaction is appropriately set according to the appropriate progress of the reaction and the degree of polymerization of the carbodiimide group. Usually, the reaction temperature is preferably 40 to 250°C, more preferably 90 to 230°C, still more preferably 100 to 200°C. If the reaction is performed in the solvent, the reaction temperature is preferably a temperature within the range from 40°C to the boiling point of the solvent.

The reaction time is appropriately set according to the reaction temperature and the degree of polymerization of the carbodiimide group. Usually, the reaction time is preferably 0.5 to 100 hours, more preferably 1 to 70 hours, still more preferably 2 to 30 hours.

The reaction is preferably performed under an inert gas atmosphere of nitrogen gas or a noble gas.

### (Urethanization reaction and terminal capping reaction)

The urethanization reaction is a reaction of the isocyanate group with the hydroxyl group. In the method (1), for example, the reaction can be performed by heating the isocyanate-terminated polycarbodiimide, the organic compound (terminal capping agent), and the diol compound as reaction components.

These reaction components can be added at any timing. From the viewpoint of workability, all the components are preferably mixed at the same time. To suppress a side reaction, it is preferred that the isocyanate-terminated polycarbodiimide and the organic compound (terminal capping agent) be mixed to complete the terminal capping reaction, and thereafter the diol compound be added.

The reaction temperature for the urethanization reaction and the terminal capping reaction is appropriately set within the range enabling suppression of the side reactions and progression of the reactions. Usually, the reaction temperature is preferably 40 to 250°C, more preferably 90 to 220°C, still more preferably 130 to 200°C.

The reaction time is appropriately set according to the reaction temperature within the range enabling suppression of side reactions. Usually, the reaction time is preferably 0.1 to 20 hours, more preferably 0.5 to 10 hours, still more preferably 1 to 3 hours.

### (Milling)

Usually, milling is used as a method of producing the powdered polycarbodiimide compound according to the present invention from the solid polycarbodiimide compound yielded by the synthetic method as described above. Milling is not particularly limited, and can be performed by a known method. To be noted, milling is performed at a temperature below the melting point of the polycarbodiimide compound to suppress blocking thereof during milling.

Examples of the milling method include a method of milling the solid polycarbodiimide compound by friction using a mortar and a muddler, a method of milling the solid polycarbodiimide compound by an impact using a ball mill, a jet mill, or a stamp mill, and a method of milling the solid polycarbodiimide compound by shear using a cutter.

Although not particularly limited, usually the powdered polycarbodiimide compound prepared through milling preferably has a particle diameter of about 10 to 2000 µm from the viewpoint of transportation and easiness in handling when added to and mixed with the ester resin.

### [Ester resin composition]

The ester resin composition according to the present invention comprises the powdered polycarbodiimide compound and an ester resin. The powdered polycarbodiimide compound according to the present invention can be suitably used as a hydrolytic-resistance stabilizer for the ester resin.

From the viewpoint of the performance required for the applications thereof, the ester resin composition may optionally contain known additives used in the ester resin, such as an antioxidant, a flame retardant, an ultraviolet absorbing agent, and a colorant, in the ranges not impairing the advantageous effects of the present invention.

The ester resin composition can also be suitably used for a food product packaging container.

The term "food product packaging container" used here encompasses utensils for food products and food products container packagings. Examples of the utensils for food products include bowls, dishes, lunch boxes, cups, chopsticks, spoons, knives, forks, kitchen knives, cutting boards, and mixing bowls. Examples of the food products container packagings include cups, bottles, bags, trays, capsules, retort pouches, wrapping films and laminate films. The food product packaging container may be disposable, or may be repeatedly usable. The food products may be solid or liquid.

For such a food product packaging container, standards of chemical substances to be used are specified to ensure safety by preventing elution of chemical substances such as additives, which may migrate to food products and do harm to living bodies. The powdered polycarbodiimide compound satisfies such safety standards, and can be used as a favorable hydrolytic-resistance stabilizer for the ester resin, as described above. Accordingly, the ester resin composition comprising the powdered polycarbodiimide compound can also be suitably used in the ester resin contained in the food product packaging container.

The ester resin can be any ester resin as long as it is a resin having an ester bond. The ester resin may be a single ester resin or may be a combination of ester resins.

Examples of the ester resin include polyhydroxy alkane acids such as polyethylene terephthalate, polybutylene terephthalate, polybutylene succinate, polybutylene succinate adipate, polybutylene adipate terephthalate, polyethylene naphthalate, polyarylate, ethylene terephthalate-isophthalate copolymers, polylactic acid, and polybutyric acid. Examples thereof also include vinyl ester resins and ester polyurethane resins.

To ensure sufficient hydrolytic resistance and suppress an increase in viscosity when the powdered polycarbodiimide compound is added to and mixed with the ester resin, the content of the powdered polycarbodiimide compound in the ester resin composition is preferably 0.2 to 5.0 parts by mass, more preferably 0.3 to 3.0 parts by mass, still more preferably 0.5 to 2.0 parts by mass relative to 100 parts by mass of the ester resin.

If the content is 0.2 parts by mass or more, sufficient hydrolytic resistance can be imparted to the ester resin. If the content is 5.0 parts by mass or less, the viscosity is hardly increased when the powdered polycarbodiimide compound is added to and mixed with the ester resin.

The ester resin composition can be prepared by melt kneading the ester resin and the powdered polycarbodiimide compound. At this time, a premixture of the powdered polycarbodiimide compound and the ester resin may be melt kneaded, or the powdered polycarbodiimide compound may be added to a melted ester resin, followed by kneading. Alternatively, a product prepared from a resin compound, such as a masterbatch, and the ester resin may be melt kneaded by any one of these methods. Other than the powdered polycarbodiimide compound, the additives described above may be added in the ranges not impairing the advantageous effects of the present invention.

Any melt kneading method can be used, and melt kneading can be performed by a known kneader. Examples of the kneader include mono- or double-axial extruders and roll mixers.

Ester resin products can be produced using the ester resin composition by a known molding method such as injection molding, film molding, blow molding, and foaming molding. The ester resin composition can be molded into a variety of forms such as a film, a sheet, or a block at a temperature equal to or higher than the melting point of the ester resin to be used.

### Examples

The present invention will now be described in more detail by way of Examples, but these should not be construed as limitations to the present invention.

### [Synthesis of powdered polycarbodiimide compound]

Details of raw material compounds used in synthesis of the powdered polycarbodiimide compounds in Examples and Comparative Examples below will be shown below.

The molecular weight in this specification is a calculated value or a catalogue value.

### <Organic compound (terminal capping agent)>

· MPG: polyethylene glycol monomethyl ether (tetraethylene glycol monomethyl ether); molecular weight: 208.25, boiling point: 295°C
· 2-EH: 2-ethylhexanol; molecular weight: 130.23, boiling point: 184°C
· ethanol; molecular weight: 46.07, boiling point: 78.29°C <Diisocyanate compound>
· HMDI: dicyclohexylmethane-4,4'-diisocyanate; molecular weight: 262.35
· MDI: 4,4'-diphenylmethane diisocyanate; molecular weight: 250.26 <Diol compound>
· EG: ethylene glycol; molecular weight: 62.07
· BD: 1,4-butane diol; molecular weight: 90.12
· P-520: polyester polyol; "Kuraray Polyol P-520", available from Kuraray Co., Ltd., molecular weight: 500
· PEG 400: polyethylene glycol; molecular weight: 400

In the synthesis of the powdered polycarbodiimide compound, analyses and measurements were performed by apparatuses or methods shown below.

### <Measurement of infrared radiation absorption (IR) spectrum>

apparatus used: Fourier transform infrared spectrophotometer "FTIR-8200PC" (available from SHIMADZU Corporation)

### <Degree of polymerization of carbodiimide group>

apparatus used: autotitrator "COM-900" (available from Hiranuma Sangyo Co., Ltd.), Tight Station "K-900" (available from Hiranuma Sangyo Co., Ltd.)
A toluene solution of dibutylamine having a known concentration was mixed with the isocyanate-terminated polycarbodiimide prepared through a carbodiimidization reaction to react isocyanate groups in the isocyanate-terminated polycarbodiimide with dibutylamine. The residual dibutylamine was subjected to neutralization titration with a hydrochloric acid standard solution to calculate the residual amount of the isocyanate group (terminal NCO amount [mass%]). From this terminal NCO amount, the degree of polymerization of the carbodiimide group was determined.

### (Example 1)

100 Parts by mass of HMDI and 0.5 parts by mass of 3-methyl-1-phenyl-2-phospholene-1-oxide as a carbodiimidization catalyst were placed into a reaction vessel with a reflux tube and a stirrer, and were mixed under stirring at 185°C for 24 hours under a nitrogen stream to perform a carbodiimidization reaction. An isocyanate-terminated polycarbodiimide was thus prepared.

In the resulting isocyanate-terminated polycarbodiimide, the absorption peak derived from the carbodiimide group was observed around a wavelength of 2150 cm⁻¹ in measurement of the IR spectrum. The terminal NCO amount was 8.19 mass%, and the degree of polymerization of the carbodiimide group determined by the measurement method described above was 3.5.

In the next step, 8.8 parts by mass of MPG and 4.0 parts by mass of EG were added to the isocyanate-terminated polycarbodiimide at 150°C under a nitrogen stream, followed by heating to 180°C. These materials were then mixed under stirring for 2 hours to perform a reaction.

After it was verified by measurement of the IR spectrum that the absorption peak derived from the isocyanate group at a wavelength of 2200 to 2300 cm⁻¹ disappeared, the reaction product was taken out from the reaction vessel, and was cooled to room temperature to yield a light yellow, transparent solid polycarbodiimide compound. This polycarbodiimide compound was then milled with a vertical mill ("VM-16", available from Orient Funsaiki K.K.) to prepare a light yellow white powdered polycarbodiimide compound (m = n = 3.5, p = 3).

### (Examples 2 to 6 and Comparative Examples 1 to 8)

Powdered polycarbodiimide compounds were synthesized in the same manner as in Example 1 except that the diisocyanate compound, the organic compound (terminal capping agent), and the diol compound in Example 1 were varied as shown in Table 1.

In Comparative Examples 7 and 8, the resulting polycarbodiimide compounds were viscous liquid rather than solid, and no powdered polycarbodiimide compound was prepared therefrom.

### [Measurements and evaluations of powdered polycarbodiimide compound]

The powdered polycarbodiimide compounds prepared in Examples and Comparative Examples were measured and evaluated for the following items. These results of measurements and evaluations are collectively shown in Table 1 below.

The polycarbodiimide compounds prepared in Comparative Example 7 and 8 were not powder, and thus were not subjected to the measurement of the melting point and the evaluation of blocking.

### <Melting point>

The peak top temperature in an endothermic reaction was measured with a differential scanning calorimeter ("DSC8230", available from Rigaku Corporation; temperature range for measurement: -50°C (cooled with liquid nitrogen) to 100°C, heating rate: 10°C/min.). This temperature was defined as a melting point.

### <IR peak intensity ratio (Ic/Iu)>

In the absorbance spectrum obtained from measurement with a Fourier transform infrared spectrophotometer ("FTIR-8200PC", available from SHIMADZU Corporation), the peak at a wavelength of 2116 cm⁻¹ (derived from the carbodiimide group) and the peak at a wavelength of 1720 cm⁻¹ (attributed to C=O stretching of the urethane bond) were subjected to base line correction to determine the peak heights. The correction peak height at a wavelength of 2116 cm⁻¹ was defined as a peak intensity (Ic), and a correction peak height at a wavelength 1720 cm⁻¹ was defined as a peak intensity (I_{U}) to determine the peak intensity ratio (I_{C}/I_{U}) thereof.

### <Blocking>

The powdered polycarbodiimide compound was placed to a height of about 2 cm of a cubic aluminum container having a side of 3 cm, and a load of 1.25 kgf was applied from above. The powdered polycarbodiimide compound was left to stand at 40°C for 72 hours, and then the state of powder was observed.

In the criteria for evaluation, rank A indicates the sample compound retaining a powdery state, and rank F indicates the sample compound which is in a solid platy form or not disintegrated into powder by touch.

### <Increase in viscosity (1)>

90.00 Parts by mass of polylactic acid (PLA) ("PLA4032D", available from NatureWorks LLC.; the same is true below) was melted at 180°C with a lab mixer ("Segment mixer KF70V", available from Toyo Seiki Seisaku-sho, Ltd., LABO PLASTOMILL (registered trademark); the same is true below). Thereafter, 10.00 parts by mass of the powdered polycarbodiimide compound was added, followed by kneading for 3 minutes to prepare a masterbatch of polylactic acid.

The masterbatch was dried at 90°C for 4 hours, and the melt viscosity was measured with a flowtester ("CFT-500", available from SHIMADZU Corporation) at a temperature of 210°C and a load of 5.0 kgf.

In the criteria for evaluation, rank A indicates that the melt viscosity of the sample compound was less than 1.5 times that of a (blank) product not containing a powdered polycarbodiimide compound, and rank F indicates that the melt viscosity of the sample compound was equal to or more than 1.5 times that of the blank.

### <Increase in viscosity (2)>

90.00 Parts by mass of polyethylene terephthalate (PET) ("FG720", available from SINOPEC YIZHENG CHEMICAL FIBRE CO., LTD; the same is true below) was melted at 270°C with a lab mixer. Thereafter, 10.00 parts by mass of the powdered polycarbodiimide compound was added, followed by kneading for 3 minutes to prepare a masterbatch of polyethylene terephthalate.

The masterbatch was dried at 130°C for 4 hours, and the melt viscosity was measured with a flowtester ("CFT-500", available from SHIMADZU Corporation) at a temperature of 270°C and a load of 5.0 kgf.

In the criteria for evaluation, rank A indicates that the melt viscosity of the sample compound was less than 1.5 times that of a (blank) product not containing a powdered polycarbodiimide compound, and rank F indicates that the melt viscosity of the sample compound was equal to or more than 1.5 times that of the blank.

### <Hydrolytic resistance (1)>

90.00 Parts by mass of PLA was melted at 180°C with a lab mixer. Thereafter, 10.00 parts by mass of the masterbatch prepared in the evaluation of the increase in viscosity (1) above was added, followed by kneading for 3 minutes to prepare a resin composition of PLA (content of the powdered polycarbodiimide compound: 1.00 mass%).

The resin composition was subjected to flat plate press at 180°C into a sheet having a thickness of about 300 µm. Thereafter, a strip sheet having a width of 10 mm and a length of 70 mm was prepared.

The tensile strength of the strip sheet was measured with a tensile tester ("3365", available from Instron Corporation; temperature: 20 ± 5°C (room temperature); the same is true below).

The strip sheet was set in a thermo-hygrostat ("PH-2KT-E", available from ESPEC Corp., temperature: 80°C, relative humidity: 95%) to be subjected to a hydrothermal treatment for 24 hours. The tensile strength of the strip sheet after the hydrothermal treatment was measured with the tensile tester.

Before and after the hydrothermal treatment, the average of the tensile strengths of five strip sheets was calculated, and the ratio of the average tensile strength after the treatment to the average tensile strength before the treatment was calculated as a strength retention rate.

The strength retention rate is an index for evaluating the hydrolytic resistance of the resin. In the criteria for evaluation, rank A indicates a strength retention rate of 80% or more, and rank F indicates a strength retention rate of less than 80%. For comparison and reference, a (blank) product not containing the powdered polycarbodiimide compound was also evaluated for the tensile strength in the same manner. The result of evaluation was rank F.

### <Hydrolytic resistance (2)>

90.00 Parts by mass of PET was melted at 270°C with a lab mixer. Thereafter, 10.00 parts by mass of the masterbatch prepared in the evaluation of the increase in viscosity (1) above was added, followed by kneading for 3 minutes to prepare a resin composition of PET (content of the powdered polycarbodiimide compound: 1.00 mass%).

The resin composition was subjected to flat plate press at 270°C into a sheet having a thickness of about 300 µm. Thereafter, a strip sheet having a width of 10 mm and a length of 70 mm was prepared.

The tensile strength of the strip sheet was measured with the tensile tester.

The strip sheet was set in a highly accelerated stress test system ("EHS-210M", available from ESPEC Corp.; temperature: 121°C, relative humidity: 100%) to be subjected to a hydrothermal treatment for 24 hours. The tensile strength of the strip sheet after the hydrothermal treatment was measured with the tensile tester.

Before and after the hydrothermal treatment, the average of the tensile strengths of five strip sheets was calculated, and the ratio of the average tensile strength after the treatment to the average tensile strength before the treatment was calculated as a strength retention rate.

The strength retention rate is an index for evaluating the hydrolytic resistance of the resin. In the criteria for evaluation, rank A indicates a strength retention rate of 80% or more, and rank F indicates a strength retention rate of less than 80%. For comparison and reference, a (blank) product not containing the powdered polycarbodiimide compound was also evaluated for the tensile strength in the same manner. The result of evaluation was rank F.

**Table 1**

| | Example | | | | | | Comparative Example | | | | | | | |
|---|---|---|---|---|---|---|---|---|---|---|---|---|---|---|
| | 1 | 2 | 3 | 4 | 5 | 6 | 1 | 2 | 3 | 4 | 5 | 6 | 7 | 8 |
| Diisocyanate compound | HMDI | HMDI | HMDI | HMDI | HMDI | MDI | HMDI | HMDI | HMDI | HMDI | HMDI | HMDI | HMDI | HMDI |
| Organic compound (terminal capping agent) | MPG | MPG | MPG | MPG | 2-EH | MPG | MPG | MPG | Ethanol | MPG | MPG | MPG | MPG | MPG |
| Diol compound | EG | BD | EG | EG | EG | EG | BD | BD | BD | EG | EG | EG | P-520 | PEG400 |
| Degree of polymerization of carbodiimide group (m=n) | 3.5 | 3.5 | 4 | 5 | 5 | 3 | 2 | 3.5 | 2 | 2 | 4 | 4 | 4 | 9 |
| The number of units with introduced urethane bond (p) | 3 | 3 | 3 | 3 | 3 | 3 | 2 | 2 | 2 | 2 | 2 | 1 | 1 | 2 |
| Molecular weight | 4708 | 4793 | 5145 | 6018 | 5863 | 3209 | 2693 | 3676 | 2369 | 2637 | 3947 | 2750 | 3187 | 7898 |
| The number of urethane bonds (a) | 8 | 8 | 8 | 8 | 8 | 8 | 6 | 6 | 6 | 6 | 6 | 4 | 4 | 6 |
| Carbodiimide equivalent (b) | 336 | 342 | 322 | 301 | 293 | 357 | 449 | 350 | 395 | 440 | 329 | 344 | 398 | 293 |
| b/a | 42.0 | 42.8 | 40.2 | 37.6 | 366 | 446 | 74.8 | 58.3 | 65.8 | 73.3 | 54.8 | 85.9 | 99.6 | 48.8 |
| Melting point [°C] | 54 | 50 | 56 | 58 | 60 | 65 | 33 | 40 | 36 | 38 | 48 | 31 | - | - |
| IR peak intensity ratio (I_{C}/I_{U}) | 3.8 | 3.0 | 3.8 | 3.8 | 3.8 | 4.0 | 1.9 | 2.4 | 2.2 | 2.0 | 3.5 | 3.2 | 2.6 | 5.3 |
| Blocking | Rank A | Rank A | Rank A | Rank A | Rank A | Rank A | Rank F | Rank F | Rank F | Rank F | Rank F | Rank F | - | - |
| Increase in viscosity (1) (PLA) | Rank A | Rank A | Rank A | Rank A | Rank A | Rank A | Rank A | Rank A | Rank F | Rank A | Rank A | Rank A | Rank A | Rank A |
| Increase in viscosity (2) (PET) | Rank A | Rank A | Rank A | Rank A | Rank A | Rank A | Rank A | Rank A | Rank F | Rank A | Rank A | Rank A | Rank A | Rank A |
| Hydrolytic resistance (1) (PLA) | Rank A | Rank A | Rank A | Rank A | Rank A | Rank A | Rank F | Rank A | Rank F | Rank F | Rank A | Rank A | Rank F | Rank A |
| Hydrolytic resistance (2) (PET) | Rank A | Rank A | Rank A | Rank A | Rank A | Rank A | Rank F | Rank A | Rank F | Rank F | Rank A | Rank A | Rank F | Rank A |

The results of measurements and evaluations shown in Table 1 revealed that the powdered polycarbodiimide compounds according to the present invention (Examples 1 to 6) hardly cause blocking, hardly increase the viscosity when added to and mixed with the ester resin, and can improve the hydrolytic resistance of the ester resin.

## Claims

1. A powdered polycarbodiimide compound represented by the following formula (1) and having a melting point of 50°C or more, determined as indicated in the specification: 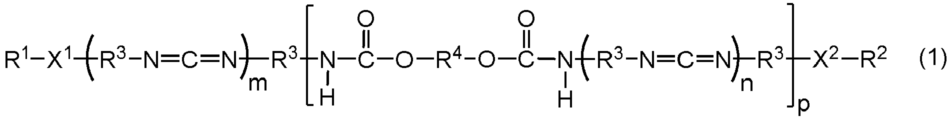
wherein R¹ and R² each independently represent a residue of an organic compound having one functional group reactive with an isocyanate group,
wherein the functional group is removed from the organic compound; with the proviso that the organic compound is not ethanol;
R³ represents a divalent residue of a diisocyanate compound from which two isocyanate groups are removed; the diisocyanate compound has a hydrocarbon group which directly bonds to the two isocyanate groups; a plurality of R³ are the same or different;
R⁴ represents a divalent residue of a diol compound from which two hydroxyl groups are removed and wherein the diol compound has a molecular weight of 100 or less; a plurality of R⁴ are the same or different;
X¹ and X² each independently represent a bond formed by a reaction of the functional group of the organic compound with the isocyanate group of the diisocyanate compound;
m and n each represent a number of 1 to 20; and p represents a number of 2 to 20.

2. The powdered polycarbodiimide compound according to claim 1, wherein the ratio (I_{C}/I_{U}) of a peak intensity (I_{C}) at a wavelength of 2100 to 2200 cm⁻¹ derived from a carbodiimide group to a peak intensity (Iv) at a wavelength of 1650 to 1750 cm⁻¹ derived from a urethane bond in an infrared absorption spectrum is 2.7 or more, wherein the IR peak intensity ratio (Ic/Iu) is determined as indicated in the specification.

3. The powdered polycarbodiimide compound according to claim 1 or 2, wherein the ratio of a carbodiimide equivalent to the number of urethane bonds in the formula (1) is 50 or less.

4. The powdered polycarbodiimide compound according to any one of claims 1 to 3, wherein the diol compound is one or more selected from the group consisting of ethylene glycol, 1,3-propylene glycol, 1,4-butanediol, and 1,3-butanediol.

5. The powdered polycarbodiimide compound according to any one of claims 1 to 4, wherein the bonds represented by X¹ and X² each are a urethane bond, a urea bond, or a carbodiimide bond.

6. The powdered polycarbodiimide compound according to any one of claims 1 to 5, wherein the organic compound is a compound represented by the following formula (2):
R¹²(OCHR¹¹CH₂)_{q}OH (2)
wherein R¹¹ represents a hydrogen atom or a methyl group; when a plurality of R¹¹ are present, these R¹¹ are the same or different;
R¹² represents a hydrocarbon group having 1 to 18 carbon atoms or an acyl group having 2 to 18 carbon atoms; and
q is an integer of 1 to 70.

7. The powdered polycarbodiimide compound according to claim 6, wherein in the organic compound, R¹¹ is a hydrogen atom and q is an integer of 1 to 10.

8. The powdered polycarbodiimide compound according to any one of claims 1 to 7, wherein the diisocyanate compound is one or more selected from the group consisting of dicyclohexylmethane-4,4'-diisocyanate and 4,4'-diphenylmethane diisocyanate.

9. An ester resin composition comprising the powdered polycarbodiimide compound according to any one of claims 1 to 8 and an ester resin.

10. The ester resin composition according to claim 9, wherein the content of the powdered polycarbodiimide compound is 0.2 to 5.0 parts by mass relative to 100 parts by mass of the ester resin.

11. The ester resin composition according to claim 9 or 10, wherein the ester resin composition is for use as a food product packaging container.

## Patentansprüche

1. Pulverförmige Polycarbodiimid-Verbindung, die durch die folgende Formel (1) dargestellt wird und einen Schmelzpunkt von 50 °C oder höher aufweist, der wie in der Beschreibung angegeben bestimmt wird: 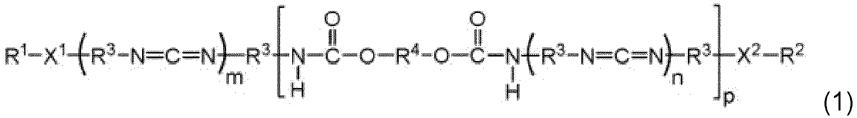
wobei R¹ und R² jeweils unabhängig einen Rest einer organischen Verbindung darstellen, die eine funktionelle Gruppe aufweist, die mit einer Isocyanatgruppe reagiert, wobei die funktionelle Gruppe von der organischen Verbindung entfernt wurde; mit der Massgabe, dass die organische Verbindung nicht Ethanol ist;
R³ einen zweiwertigen Rest einer Diisocyanat-Verbindung darstellt, von welcher zwei Isocyanat-Gruppen entfernt wurden; die Diisocyanat-Verbindung eine Kohlenwasserstoffgruppe aufweist, die direkt an die zwei Isocyanat-Gruppen bindet; eine Vielzahl von R³ jeweils gleich oder unterschiedlich ist;
R⁴ einen zweiwertigen Rest einer Diol-Verbindung darstellt, von welcher zwei Hydroxyl-Gruppen entfernt wurden, und wobei die Diol-Verbindung ein Molekulargewicht von 100 oder weniger aufweist; eine Vielzahl von R⁴ jeweils gleich oder unterschiedlich ist;
X¹ und X² jeweils unabhängig eine Bindung darstellen, die durch eine Reaktion der funktionellen Gruppe der organischen Verbindung mit der Isocyanatgruppe der Diisocyanat-Verbindung gebildet wird;
m und n jeweils eine Zahl von 1 bis 20 darstellen; und p eine Zahl von 2 bis 20 darstellt.

2. Pulverförmige Polycarbodiimid-Verbindung nach Anspruch 1, wobei das Verhältnis (I_{C}/I_{U}) einer Peak-Intensität (I_{C}) bei einer Wellenlänge von 2.100 bis 2.200 cm⁻¹, die von einer Carbodiimid-Gruppe stammt, zu einer Peak-Intensität (I_{U}) bei einer Wellenlänge von 1.650 bis 1.750 cm⁻¹, die von einer Urethan-Bindung stammt, in einem Infrarot-Absorptionsspektrum 2,7 oder mehr beträgt, wobei das Verhältnis (I_{C}/I_{U}) der IR-Peak-Intensität wie in der Beschreibung angegeben bestimmt wird.

3. Pulverförmige Polycarbodiimid-Verbindung nach Anspruch 1 oder 2, wobei das Verhältnis eines Carbodiimid-Äquivalents zu der Anzahl von Urethan-Bindungen in der Formel (1) 50 oder weniger beträgt.

4. Pulverförmige Polycarbodiimid-Verbindung nach einem der Ansprüche 1 bis 3, wobei die Diol-Verbindung eine oder mehrere ausgewählt aus der Gruppe bestehend aus Ethylenglycol, 1,3-Propylenglycol, 1,4-Butandiol, und 1,3-Butandiol ist.

5. Pulverförmige Polycarbodiimid-Verbindung nach einem der Ansprüche 1 bis 4, wobei die durch X¹ und X² dargestellten Bindungen jeweils eine Urethan-Bindung, eine Harnstoff-Bindung oder eine Carbodiimid-Bindung sind.

6. Pulverförmige Polycarbodiimid-Verbindung nach einem der Ansprüche 1 bis 5, wobei die organische Verbindung eine Verbindung ist, die durch die folgende Formel (2) dargestellt wird;
R¹²(OCHR¹¹CH₂)_{q}OH (2)
wobei R¹¹ ein Wasserstoffatom oder eine Methylgruppe darstellt; wenn eine Vielzahl von R¹¹ vorliegt, diese R¹¹ gleich oder unterschiedlich sind;
R¹² eine Kohlenwasserstoffgruppe mit 1 bis 18 Kohlenstoffatomen oder eine Acyl-Gruppe mit 2 bis 18 Kohlenstoffatomen darstellt; und
q eine ganze Zahl von 1 bis 70 ist.

7. Pulverförmige Polycarbodiimid-Verbindung nach Anspruch 6, wobei in der organischen Verbindung R¹¹ ein Wasserstoffatom ist und q eine ganze Zahl von 1 bis 10 ist.

8. Pulverförmige Polycarbodiimid-Verbindung nach einem der Ansprüche 1 bis 7, wobei die Diisocyanat-Verbindung eine oder mehrere ausgewählt aus der Gruppe bestehend aus Dicyclohexylmethan-4,4'-diisocyanat und 4,4'-Diphenylmethan-diisocyanat ist.

9. Ester-Harzzusammensetzung, umfassend die pulverförmige Polycarbodiimid-Verbindung nach einem der Ansprüche 1 bis 8 und ein Ester-Harz.

10. Ester-Harzzusammensetzung nach Anspruch 9, wobei der Gehalt an der pulverförmigen Polycarbodiimid-Verbindung 0,2 bis 5,0 Massenteile bezogen auf 100 Massenteile des Ester-Harzes beträgt.

11. Ester-Harzzusammensetzung nach Anspruch 9 oder 10, wobei die Ester-Harzzusammensetzung zur Verwendung als Verpackungsbehälter für ein Nahrungsmittelprodukt vorgesehen ist.

## Revendications

1. Composé polycarbodiimide en poudre, représenté par la formule (1) suivante et ayant un point de fusion de 50 °C ou supérieure, déterminé comme indiqué dans la spécification : 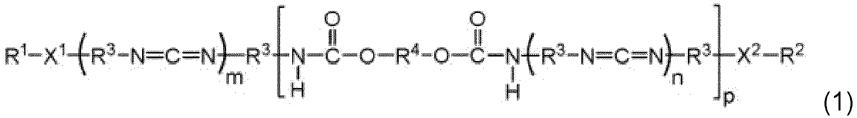
dans laquelle R¹ et R² chacun indépendamment représentent un résidu d'un composé organique ayant un groupe fonctionnel qui est réactif avec un groupe isocyanate, le groupe fonctionnel étant éliminé du composé organique ; à condition que le composé organique ne soit pas l'éthanol ;
R³ représente un résidu bivalent d'un composé diisocyanate dont deux groupes isocyanate sont enlevés ; le composé diisocyanate ayant un groupe hydrocarbure qui se lie directement aux deux groupes isocyanate ; une pluralité de R³ étant identiques ou différents ;
R⁴ représente un résidu bivalent d'un composé diol dont deux groupes hydroxyle sont enlevés, et le composé diol ayant une masse moléculaire de 100 ou inférieure ; une pluralité de R⁴ étant identiques ou différents ;
X¹ et X² chacun indépendamment représentent une liaison formée par une réaction du groupe fonctionnel du composé organique avec le groupe isocyanate du composé diisocyanate ;
m et n représentent chacun un nombre de 1 à 20 ; et p représente un nombre de 2 à 20.

2. Composé polycarbodiimide en poudre selon la revendication 1, dans lequel le rapport (Ic/lu) d'une intensité de pic (I_{C}) à une longueur d'onde de 2100 à 2200 cm⁻¹, dérivée d'un groupe carbodiimide, à une intensité de pic (lu) à une longueur d'onde de 1650 à 1750 cm⁻¹, dérivée d'une liaison uréthane, dans un spectre d'absorption infrarouge est de 2,7 ou supérieure, le rapport d'intensité de pic IR (Ic/lu) étant déterminé comme indiqué dans la spécification.

3. Composé polycarbodiimide en poudre selon la revendication 1 ou 2, dans lequel le rapport entre un équivalent carbodiimide et le nombre des liaisons uréthane dans la formule (1) est 50 ou inférieure.

4. Composé polycarbodiimide en poudre selon l'une quelconque des revendications 1 à 3, dans lequel le composé diol est un ou plusieurs choisi dans le groupe constitué par l'éthylène glycol, le 1,3-propylène glycol, le 1,4-butanediol, et le 1,3-butanediol.

5. Composé polycarbodiimide en poudre selon l'une quelconque des revendications 1 à 4, dans lequel les liaisons représentées par X¹ et X² sont chacune une liaison uréthane, une liaison urée ou une liaison carbodiimide.

6. Composé polycarbodiimide en poudre selon l'une quelconque des revendications 1 à 5, dans lequel le composé organique est un composé représenté par la formule (2) suivante ;
R¹²(OCHR¹¹CH₂)_{q}OH (2)
dans laquelle R¹¹ représente un atome d'hydrogène ou un groupe méthyle ; lorsque une pluralité de R¹¹ est présente, ces R¹¹ sont identiques ou différents ;
R¹² représente une groupe hydrocarbure ayant 1 à 18 atomes de carbone ou une groupe acyle ayant 2 à 18 atomes de carbone ; et
q est un nombre entier de 1 à 70.

7. Composé polycarbodiimide en poudre selon la revendication 6, dans lequel R¹¹ dans le composé organique est un atome de carbone et q est un nombre entier de 1 à 10.

8. Composé polycarbodiimide en poudre selon l'une quelconque des revendications 1 à 7, dans lequel le composé diisocyanate est un ou plusieurs choisi dans le groupe constitué par le diisocyanate de dicyclohexylméthane-4,4' et le diisocyanate de 4,4'-diphénylméthane.

9. Composition de résine d'ester comprenant le composé polycarbodiimide en poudre selon l'une quelconque des revendications 1 à 8 et une résine d'ester.

10. Composition de résine d'ester selon la revendication 9, dans lequel la teneur en composé polycarbodiimide en poudre est comprise entre 0,2 et 5,0 parties en masse par rapport à 100 parties en masse de la résine d'ester.

11. Composition de résine d'ester selon la revendication 9 ou 10, dans lequel la composition de résine d'ester est prévue pour l'utilisation comme contenant pour l'emballage d'un produit alimentaire.
